# EUROPÄISCHE PATENTSCHRIFT

(11) **EP 2 489 945 B1**
(45) Veröffentlichungstag und Bekanntmachung des Hinweises auf die Patenterteilung: **13.12.2023**
(21) Anmeldenummer: 12155989.2
(22) Anmeldetag: 17.02.2012
(51) Int. Cl.: F24D 17/00, F24D 3/10, F24H 9/00, F24H 1/18, F24H 1/20, F28D 20/00, F24D 11/00

(54) **Wärmespeicher**
Heat accumulator
Accumulateur thermique

(30) Priorität: 18.02.2011 AT 2212011
(43) Veröffentlichungstag der Anmeldung: 22.08.2012
(73) Patentinhaber: Laabmayr, Robert, 5302 Henndorf am Wallersee (AT)
(72) Erfinder: Laabmayr, Robert, 5302 Henndorf am Wallersee (AT)
(74) Vertreter: Jell, Friedrich

(56) Entgegenhaltungen:
- EP-A1- 2 063 209
- EP-A2- 0 330 312
- EP-A2- 0 578 126
- EP-A2- 2 206 971
- DE-A1- 3 003 688
- DE-A1- 4 301 723
- DE-A1-102005 052 318
- DE-A1-102007 059 099
- DE-B3-102005 002 408
- DE-U1- 20 317 010
- DE-U1-202005 013 700
- DE-U1-202006 012 302

## Beschreibung

Die Erfindung betrifft einen Wärmespeicher mit einem unterschiedliche Heizwassertemperaturen aufweisenden Heizwasserspeicher, mit einem mit dem Heizwasserspeicher zirkulationsverbundenen und eine freie Konvektion des Heizwassers aufweisenden Strömungskanal und mit wenigstens einer im Strömungskanal vorgesehenen zumindest teilweise schraubenförmig verlaufenden Leitung zur Führung einer im Wärmeaustausch mit dem Heizwasser stehenden Flüssigkeit.

Um Brauchwasser mit Hilfe einer freien Konvektion von Heizwasser eines Wärmespeichers erwärmen zu können, ist es aus dem Stand der Technik (WO00/29789 A1) bekannt, im Heizwasserspeicher einen Strömungskanal vorzusehen, in den Leitungen für Brauchwasser eingebracht sind. Derartige Thermosiphonsysteme sind zwar kostengünstig, zuverlässig und wartungsarm, weisen jedoch verhältnismäßig geringe Konvektionsströmungen im Strömungskanal und damit einen niedrigen Wirkungsgrad im Wärmeaustausch zwischen Heiz- und Brauchwasser auf. Für hohe Mengen- sowie Temperaturanforderungen bei der Erzeugung von Brauchwasser sind daher solche Wärmespeicher nicht geeignet.

Außerdem ist bei einem Wärmespeicher bekannt (DE19848648C1), um einem Brauchwasserspeicher einen Strömungskanal für Heizwasser vorzusehen, damit dieser mit Hilfe einer freien Konvektion erwärmt werden kann. Diese Konvektion wird erzeugt, indem Heizwasser des Strömungskanals aufgrund einer Entnahme von Brauchwasser abkühlt, im Strömungskanal nach unten absinkt und dann aus dem Strömungskanal austritt, wodurch heißes Heizwasser in den Strömungskanal nachgezogen wird. Zwar kann ein Brauchwasserspeicher über sein Speichervolumen einen vorbestimmten Verbrauch abdecken, jedoch ist dessen Umströmung zu Zwecken des Wärmeaustauschs mit dem Heizwasser nicht besonders effektiv. Verhältnismäßig große Brauchwasserspeicher werden daher benötigt, um Mengen- und Temperaturanforderungen genügen zu können, weil bei einem abgekühlten Brauchwasserspeicher lediglich mit einer langsamen Nacherwärmung zu rechnen ist. Dies kann auch durch eine schlecht wärmeleitende Seitenwand des Strömungskanals zur Kanalisierung des Heizwassers nicht behoben werden, zumal der Strömungskanal in der Art einer Wärmefalle konzipiert ist.

Die Dokumente EP 2 206 971 A2 und DE 43 01 723 A1 zeigen Wärmespeicher mit den Merkmalen des Oberbegriffs des Anspruchs 1

Die Erfindung hat sich daher die Aufgabe gestellt, einen Wärmespeicher der eingangs geschilderten Art derart zu verbessern, dass trotz eines Thermosiphonsystems zum Wärmeaustausch zwischen Heizwasser und Flüssigkeit bzw. einem Brauchwasser, ein hoher Wirkungsgrad zur ausreichenden Abdeckung der Mengen- und Temperaturanforderungen möglich wird. Außerdem soll die Dynamik des Thermosiphonsystems verbessert werden, um so wechselnden Mengen- und Temperaturanforderungen des Wärmetauschers schnell folgen zu können.

Die Erfindung löst die gestellte Aufgabe durch die Merkmale des Anspruchs 1.

Weist die Wand des Strömungskanals zumindest bereichsweise eine Wärmeisolierung auf, dann kann gegenüber dem Stand der Technik selbst eine vergleichsweise geringe Temperaturdifferenz im Heizwasserspeicher eine Grundkonvektion im Strömungskanal schaffen. Diese Grundkonvektion kann selbst dann aufrecht gehalten werden, wenn die Leitungen im Strömungskanal eine geringe bzw. keine Anforderung an einen Wärmeaustausch mit dem Heizwasser stellen. Diese erfindungsgemäße durchgehende, wenngleich auch womöglich geringe Konvektion eröffnet jedoch im Gegensatz zum Stand der Technik die Möglichkeit, für eine vergleichsweise hohe Dynamik beim Entladen des Wärmespeichers zu sorgen. Es hat sich nämlich herausgestellt, dass sich mit variierender Leistungsanforderung an den Wärmetauscher die freie Konvektion in deren Parametern vergleichsweise schnell anpassen kann, wenn von einer Grundkonvektion ausgegangen wird. Selbst Leistungsspitzen können daher von solch einem Wärmetauscher abgedeckt werden, womit dieser auch vergleichsweise hohen Mengen- und Temperaturanforderungen gerecht werden kann. Hinzu kommt, dass durch die thermische Dämmung der Wand des Strömungskanals eine unerwünschte Beeinträchtigung der Konvektionsströmung reduziert werden kann, was vergleichsweise hohe Konvektionsströme und damit auch einen vergleichsweise hohen Wirkungsgrad am Wärmetauscher ermöglichen kann. Eine derartige Wärmedämmung kann beispielsweise ermöglicht werden, wenn die Wand mit schlecht wärmeleitenden Materialien isoliert oder auch die Wand aus solch einem Material besteht. Derartige Wärmeisolierungen mit einem vergleichsweisen hohen Widerstand für einen Wärmefluss an thermischer Energie sind aus dem Stand der Technik bekannt, zum Beispiel Kunststoffschäume. Vorteilhaft kann durch die erfindungsgemäße Wärmeisolierung nicht nur eine freie Grundkonvektion, sondern auch die im Zusammenhang mit den Leistungsanforderungen des Wärmetauschers stehende freie Konvektion verbessert werden. Dazu kann beispielsweise auch ein Verlauf des Strömungskanals im Wesentlichen in eine vertikale Richtung beitragen, um so einen widerstandsarmen Kreislauf des Heizwassers zu ermöglichen bzw. auch die Schwerkraft des Heizwassers besonders vorteilhaft zu nützen. Bevorzugt kann die Wand des Strömungskanals aus einer Wärmeisolierung bestehen. Gegenüber dem aus dem Stand der Technik bekannten Thermosiphonsystemen kann daher nicht nur konstruktiv einfach und damit kostengünstig ein Strömungskanal hinsichtlich seiner freien Konvektion verbessert, sondern auch die Dynamik und die Leistungsfähigkeit des damit umströmten Wärmetauschers deutlich erhöht werden.

Ist die Leitung als Wellrohr ausgebildet, dann eröffnet sich auf konstruktiv einfache Weise die Möglichkeit, den Wirkungsgrad des Wärmetauschers noch weiter zu erhöhen. Einerseits kann die Wellenform für eine erhöhte Durchmischung und damit für eine verbesserte Wärmeaufnahme des leitungsgeführten Brauchwassers sorgen und andererseits kann diese Wellenform auch hohe Strömungsgeschwindigkeiten im Strömungskanal ermöglichen. Diese Wellenform kann nämlich auch bei einer schraubenförmig verlaufenden Leitung für einen verminderten Strömungswiderstand im Strömungskanal sorgen, so dass eine Störung der Grundkonvektion klein gehalten werden kann. Außerdem kann durch die Wellenform auf konstruktiv einfache Weise eine turbulente Strömung im Strömungskanal, als auch in der Leitung erzeugt werden, was für eine verbesserte Wärmeübergabe bzw. -aufnahme sorgt. Im Gegensatz zu bekannten Thermosiphonsystemen kann daher selbst bei einer großen Wärmetauschfläche und damit einem hohen Wirkungsgrad des Wärmetauschers auch eine verbesserte Dynamik ermöglicht werden.

Einfache Konstruktionsverhältnisse können sich ergeben, wenn der Strömungskanal im Wesentlichen entlang des Mantels des Heizwasserspeichers verläuft und wenn die Leitung als Brauchwasserleitung zum Erwärmen von Brauchwasser ausgeführt ist. Vorteilhaft kann außerdem damit eine erhebliche Bogenlänge der schraubenförmig verlaufenden Leitung ermöglicht werden, wodurch die Fläche zur Erwärmung des Brauchwassers und damit der Wirkungsgrad des Wärmetauschers deutlich verbessert werden kann.

Um die Durchflusskapazität des Wärmetauschers erhöhen zu können, kann vorgesehen sein, dass im Strömungskanal mehrere parallel geschaltete Brauchwasserleitungen vorgesehen sind. Außerdem kann damit die Dynamik des Wärmetauschers verbessert werden, weil mit Hilfe eines erhöhten Kälteeintrags im Strömungskanal ein schnelles Ansprechen der Konvektion möglich wird. Der Heizwasserspeicher kann daher im Gegensatz zum Stand der Technik vergleichsweise schnell über das Brauchwasser entladen und so für eine hohe Schüttleistung der Brauchwasserleitungen genützt werden. Außerdem kann durch eine erhöhte Anzahl an Brauchwasserleitungen vorteilhaft eine geringe Grädigkeit des Wärmetauschers ermöglicht werden.

Konstruktive Einfachheit kann sich ergeben, wenn die Brauchwasserleitungen an einen gemeinsamen Verteiler mit einem Kaltwasseranschluss anschließen und in einen gemeinsamen Verteiler mit einem Warmwasseranschluss münden. Außerdem können damit gleichmäßige Druckverhältnisse in den parallelen Leitungen für eine verbesserte Wirkleistung des Wärmetauschers gewährleistet werden.

In den Figuren ist beispielsweise der Erfindungsgegenstand anhand eines Ausführungsbeispiels dargestellt. Es zeigen
- Fig. 1: eine Schnittansicht eines Wärmespeichers,
- Fig. 2: eine Schnittansicht nach II-II der Fig. 1,
- Fig. 3: eine teilweise aufgerissene Teilansicht nach Fig. 1 und
- Fig. 4 und 5: vergrößerte Teilansichten der Fig. 1.

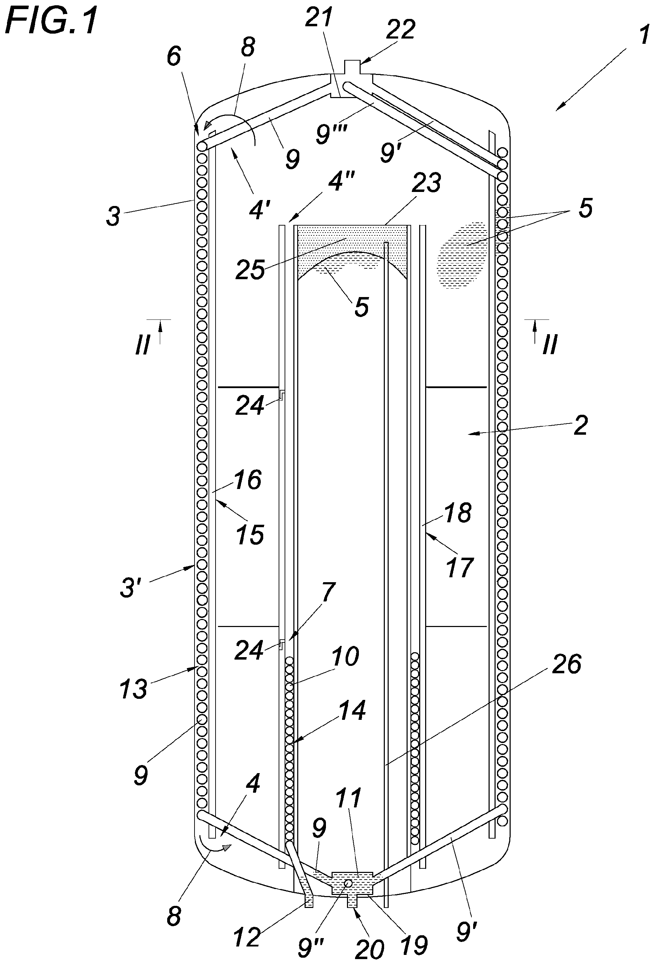

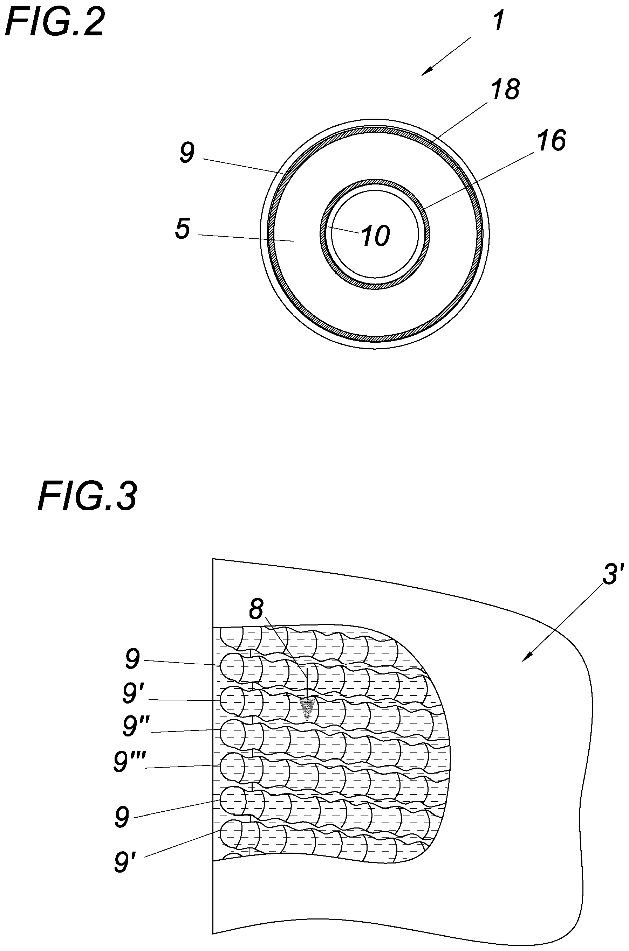

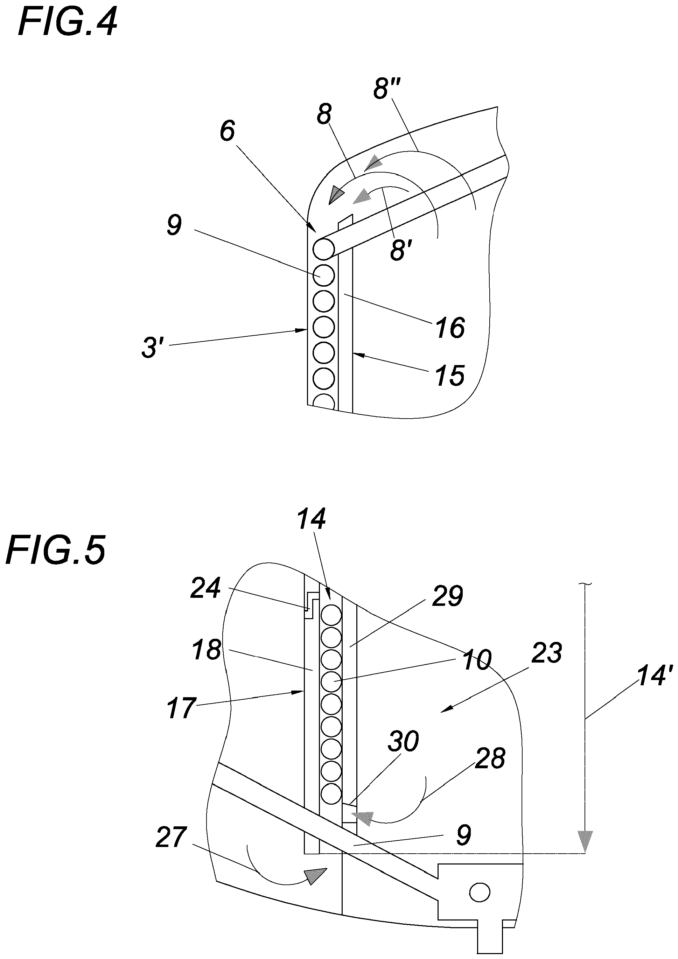

Der nach Fig. 1 beispielsweise dargestellte Wärmespeicher 1 weist einen Heizwasserspeicher 2 auf, der von einer Speicherwand 3 umfasst ist. An diese Speicherwand 3 schließt eine nicht näher dargestellte Außenisolierung an. Bekanntermaßen weist ein wärmebeladender Heizwasserspeichers 2 einen vertikalen Temperaturgradienten auf, was unterschiedliche Heizwassertemperaturen 4, 4', 4" des Heizwassers 5 im Heizwasserspeicher 2 bedingt. Diese temperaturbedingten Dichteunterschiede des Heizwassers 5 können zur Schaffung eines Thermosiphonsystems genützt werden. Zu diesem Zweck ist im Heizwasserspeicher 2 ein erfindungsgemäßer Strömungskanal 6 und ein zweiter nicht erfindungsgemäßer Strömungskanal 7 vorgesehen, der derart mit dem Heizwasserspeicher 2 zirkulationsverbunden ist, dass eine freie Konvektion 8 des Heizwassers 5 eintritt. Diese freie Konvektion 8 kann genutzt werden, Leitungen 9 bzw. 10 im Strömungskanal 6 bzw. 7 mit Heizwasser 5 zu beaufschlagen, welche Leitungen 9 bzw. 10 zur Führung einer im Wärmeaustausch mit dem Heizwasser 5 stehenden Flüssigkeit 11 bzw. 12 dienen. Diese Konstruktion kann nun ohne zusätzlichen Energieeintrag einen mit Heizwasser 5 umströmten Wärmetauscher 13 bzw. 14 schaffen. Die Leitungen 9 bzw. 10 sind schraubenförmig im Strömungskanal 6, 7 verlaufend vorgesehen, um damit unter anderem eine hohe Wärmetauschfläche zu bieten, was beispielsweise mit Blick auf die Leitungen 9 der Fig. 3 in Zusammenhang mit der Fig. 2 zu erkennen ist. Besonders kann der Wirkungsgrad und die Dynamik des Wärmetauschers 13 bzw. 14 verbessert werden, wenn die Wand 15 bzw. 17 des Strömungskanals 6 bzw. 7 aus einer Wärmeisolierung 16 bzw. 18 besteht. Zum einen kann damit eine Grundkonvektion 8' sichergestellt werden und zum anderen kann damit eine hohe anforderungsspezifische Konvektion 8" (Konvektion aufgrund der jeweiligen Leistungsanforderungen des Wärmetauschers 13 bzw. 15) erzeugt werden, weil der Strömungskanal 6 bzw. 7 zum Heizwasserspeicher 2 thermisch getrennt ausgeführt ist, was den Figuren 4 und 5 besser entnommen werden kann. Die erfindungsgemäße freie Konvektion 8, bestehend aus Grundkonvektion 8' und anforderungsspezifische Konvektion 8", ist daher besonders geeignet, hohen Menge- und Temperaturanforderungen an zu erwärmender Flüssigkeit gerecht zu werden. Erfindungsgemäss ist der Strömungskanal 6 und vorteilhaft auch der Strömungskanal 7 im Wesentlichen in eine Richtung vertikal verlaufend ausgeführt, um damit die Auftrieb- oder Abtriebströmungen bzw. -kräften für Wärmetauschzwecke ungehindert nützen zu können, wie dies insbesondere in der Fig. 1 erkannt werden kann. Außerdem kann damit selbst bei geringen Temperaturunterschieden im Heizwasserspeicher 2 eine Grundkonvektion 8' sichergestellt werden.

Der Strömungskanal 6 verläuft entlang des Mantels 3' des Heizwasserspeichers 2. Somit kann sich ein besonders homogener vertikaler Strömungskanal 6 mit einer vergleichsweise hoher Konvektion bilden. Hinzu kommt, dass durch den Strömungskanal 6 entlang des Mantels 3' die Wärmeverluste des Heizwasserspeichers stets in den unteren Bereich des Heizwasserspeichers 2 eingebracht werden können. Die Schichtung des Heizwasserspeichers 2 kann damit vergleichsweise lange aufrecht bleiben, so dass trotz einer Abkühlung des Heizwasserspeichers 2 immer noch ausreichend hohe Temperaturen für einen Wärmeaustausch zur Verfügung stehen. Bereitschaftsverluste können damit vermindert ins Gewicht fallen.

Außerdem weist dieser randseitige Strömungskanal 6 auch verhältnismäßig große Abmessungen auf, so dass dieser besonders für Leitungen 9 zum Erwärmen von Brauchwasser 11 geeignet ist, weil hier Leitungen 9 mit erheblicher Länge verlegt werden können. Ein leistungsfähiger Wärmetauscher 13 zum Erwärmen von Brauchwasser 11 kann so geschaffen werden.

Die Leitung 9 ist als Wellrohr ausgebildet, wie dies der Teilansicht nach Fig. 3 entnommen werden kann, welche Wellenrohrform für eine verbesserte Entladung des Heizwasserspeichers 2 sorgen kann.

Im Strömungskanal 6 sind vier parallel geschaltete Brauchwasserleitungen 9, 9', 9", 9‴ vorgesehen, um so eine effizientere Entladung des Heizwasserspeichers 2 zu ermöglichen. Diese Leitungen 9, 9', 9", 9‴ sind ebenso als Wellrohr ausgebildet, um den aus dem Heizwasserspeichers 2 zu entziehenden Energieinhalt zusätzlich zu erhöhen.

Die Brauchwasserleitungen 9, 9', 9", 9‴ sind an einen gemeinsamen Verteiler 19 mit einem Kaltwasseranschluss 20 angeschlossen und münden in einen gemeinsamen Verteiler 21 mit einem Warmwasseranschluss 22. Die Verteiler 19 und 21 sind im Heizwasserspeicher 2 vorgesehen, womit eine konstruktiv einfache Lösung erzielt werden kann.

Der Heizwasserspeicher 2 nimmt außerdem einen Druckausgleichsbehälter 23 mittig auf. Der Druckausgleichsbehälter 23 wird zum Tragen der Leitungen 10 des zweiten Strömungskanals 7 verwendet, womit eine konstruktiv einfache Lösung erzielt wird.

Einer unterschiedlichen Schichtung im Heizwasserspeicher 2 kann entsprochen werden, wenn dieser zweite Strömungskanal 7 über seine Kanallänge 14' Öffnungen 24 zum Wärmeaustausch mit Heizwasser 5 des Heizwasserspeichers 2 aufweist. Diese Öffnung 24 ist s-förmig verlaufend in die Isolierung 18 eingebracht und ermöglicht eine besonders vorteilhafte Schichtung, indem sie ein Rückströmen des Heizwassers 5 des zweiten Strömungskanals 7 in den Heizwasserspeicher 2 ermöglichen, wenn dessen Aufsteigen durch Schichten mit höheren Temperaturen begrenzt wird.

Der Druckausgleichsbehälter 23 weist ein Gas, insbesondere ein Inertgas 25, auf, das über eine Gasdruckleitung 26 in den Druckausgleichsbehälter 23 eingebracht werden kann. Außerdem kann diese Gasdruckleitung 26 zum Entlüften des Heizwasserspeichers verwendet werden, um diesen mit Heizwasser zu befüllen. Nach dem Befüllen kann dann das Inertgas 25 eingebracht werden, um anhand der Kompressibilität eine Wärmedehnung des Heizwassers abfangen zu können.

Die Leitungen 10 im zweiten Strömungskanal 7 sind beispielsweise mit einem nicht dargestellten Solarkollektor verbunden, so dass über diese Leitungen 10 der Heizwasserspeicher 2 beladen werden kann. Bei dieser Erwärmung bildet sich eine freie Konvektion 27 aus, die sich mit einer freien Konvektion 28 aus dem Druckausgleichsbehälter 23 verbinden kann, um für eine besondere Beladung des Heizwasserspeichers 2 sorgen zu können. Zu diesem Zweck weist die isolierte Außenwand 29 des Druckausgleichsbehälters 23 eine Verbindungsöffnung 30 auf. Über diese Verbindungsöffnung 30 kann zunächst der Druckausgleichsbehälter 23 die Wärmedehnung des Heizwassers 5 aufnehmen. Wird der Heizwasserspeicher 2 entladen, dann kann vorteilhaft das heiße Heizwasser 5 des Druckausgleichsbehälters über die jeweilige Öffnung 24 des zweiten Strömungskanals 7 in die zugehörige Schichtung des Heizwasserspeichers 2 eingetragen werden.

Die Leitungen 10 im Strömungskanal 14 sind beispielsweise mit einem nicht dargestellten Solarkollektor verbunden, so dass über diese Leitungen 10 der Heizwasserspeicher 2 beladen werden kann. Bei dieser Erwärmung bildet sich eine freie Konvektion 27 aus, die sich mit einer freien Konvektion 28 aus dem Druckausgleichsbehälter 23 verbinden kann, um für eine besondere Beladung des Heizwasserspeichers 2 sorgen zu können. Zu diesem Zweck weist die isolierte Außenwand 29 des Druckausgleichsbehälters 23 eine Verbindungsöffnung 30 auf. Über diese Verbindungsöffnung 30 kann zunächst der Druckausgleichsbehälter 23 die Wärmedehnung des Heizwassers 5 aufnehmen. Wird der Heizwasserspeicher 2 entladen, dann kann vorteilhaft das heiße Heizwasser 5 des Druckausgleichsbehälters über die jeweilige Öffnung 24 des Strömungskanal 14 in die zugehörige Schichtung des Heizwasserspeichers 2 eingetragen werden.

## Patentansprüche

1. Wärmespeicher mit einem unterschiedliche Heizwassertemperaturen (4, 4', 4") aufweisenden Heizwasserspeicher (2), mit einem mit dem Heizwasserspeicher (2) zirkulationsverbundenen und eine freie Konvektion (8) des Heizwassers (5) aufweisenden Strömungskanal (6) und mit wenigstens einer im Strömungskanal (6) vorgesehenen Leitung (9) zur Führung einer im Wärmeaustausch mit dem Heizwasser (5) stehenden Flüssigkeit (11), wobei wenigstens die Wand (15) des Strömungskanals (6) zumindest bereichsweise eine Wärmeisolierung (16) aufweist, der Strömungskanal (6) in eine Richtung vertikal verlaufend ausgeführt ist und die Leitung (9) im Strömungskanal (6) schraubenförmig verlaufend vorgesehen ist, **dadurch gekennzeichnet, dass** die Leitung (9) als Wellrohr ausgebildet ist, wobei der Strömungskanal (6) im Wesentlichen entlang des Mantels (3') des Heizwasserspeichers (2) verläuft und dass die Leitung (9) als Brauchwasserleitung zum Erwärmen von Brauchwasser ausgeführt ist, wobei im Strömungskanal (6) mehrere parallel geschaltete Brauchwasserleitungen (9, 9', 9", 9‴) vorgesehen sind.

2. Wärmespeicher nach Anspruch 1, **dadurch gekennzeichnet, dass** die Brauchwasserleitungen (9, 9', 9", 9‴) an einen gemeinsamen Verteiler (19) mit einem Kaltwasseranschluss (20) anschließen und in einen gemeinsamen Verteiler (21) mit einem Warmwasseranschluss (22) münden.

## Claims

1. Heat accumulator having a heating water storage tank (2) with different heating water temperatures (4, 4', 4"), having a flow channel (6) which is connected for circulation to the heating water storage tank (2) and has free convection (8) of the heating water (5), and having at least one line (9) provided in the flow channel (6) for guiding a liquid (11) which is in heat exchange with the heating water (5), wherein at least the wall (15) of the flow channel (6) has a thermal insulation (16) at least in certain regions, the flow channel (6) is designed to extend vertically in one direction and the line (9) is provided in the flow channel (6) to run helically, **characterized in that** the line (9) is designed as a corrugated tube, wherein the flow channel (6) extends substantially along the jacket (3') of the heating water storage tank (2), and **in that** the line (9) is designed as a service water line for heating service water, wherein a plurality of service water lines (9, 9', 9", 9‴) connected in parallel are provided in the flow channel (6).

2. Heat accumulator according to claim 1, **characterized in that** the service water lines (9, 9', 9", 9‴) connect to a common distributor (19) with a cold-water connection (20) and open into a common distributor (21) with a hot-water connection (22).

## Revendications

1. Accumulateur de chaleur avec un réservoir d'eau de chauffage (2) présentant différentes températures d'eau de chauffage (4, 4', 4"), avec un conduit de circulation (6) communiquant en circulation avec le réservoir d'eau de chauffage (2) et présentant une convection libre (8) de l'eau de chauffage (5) et avec au moins une conduite (9) prévue dans le conduit de circulation (6) pour acheminer un liquide (11) en échange thermique avec l'eau de chauffage (5), dans lequel au moins la paroi (15) du conduit de circulation (6) présente au moins par zone une isolation thermique (16), le conduit de circulation (6) est construit verticalement dans une direction et la conduite (9) est disposée en spirale dans le conduit de circulation (6), **caractérisé en ce que** la conduite (9) est réalisée comme un tuyau ondulé, le conduit de circulation (6) passant pour l'essentiel le long de l'enveloppe (3') du réservoir d'eau de chauffage (2), et **en ce que** la conduite (9) est réalisée comme une conduite d'eau industrielle ou sanitaire pour le chauffage d'eau industrielle ou sanitaire, plusieurs conduites d'eau industrielle ou sanitaire (9, 9', 9", 9‴) montées en parallèle étant prévues dans le conduit de circulation (6).

2. Accumulateur de chaleur selon la revendication 1, **caractérisé en ce que** les conduites d'eau industrielle ou sanitaire (9, 9', 9", 9‴) se raccordent sur un distributeur (19) commun avec un raccord d'eau froide (20) et débouchent dans un distributeur (21) commun avec un raccord d'eau chaude (22).
